# EUROPEAN PATENT SPECIFICATION

(11) **EP 2 201 147 B1**
(45) Date of publication and mention of the grant of the patent: **16.05.2012**
(21) Application number: 08806520.6
(22) Date of filing: 06.10.2008
(51) Int. Cl.: C22B 9/02, C22B 21/06, F16B 25/10

(54) **EXTRACTION DEVICE**
EXTRAKTIONSVORRICHTUNG
DISPOSITIF D'EXTRACTION

(30) Priority: 12.10.2007 GB 0719981
(43) Date of publication of application: 30.06.2010
(73) Proprietor: Pyrotek Engineering Materials Limited, Wymbush, Milton Keynes MK8 8LN (GB)
(72) Inventor: VINCENT, Mark, Lieghton Buzzard LU7 8UL (GB)
(74) Representative: Morris, Jonathan Paul
(86) International application number: PCT/GB2008/003380
(87) International publication number: WO 2009/047486

(56) References cited:
- WO-A-93/12312
- WO-A-2007/012795
- DE-U1-202005 005 708
- US-A- 4 593 872
- US-A- 5 282 708
- US-A- 5 718 153

## Description

The present invention relates to an extraction device for use when extracting a ceramic foam filter, as used for example in the production and processing of aluminium and other metals.

Molten aluminium usually has to be filtered before it is cast. The filtration process removes particles that could otherwise cause rejects in the final products.

Traditionally, ceramic foam filters are used. These are made from alumina refractory slurry by impregnating a reticulated foam manufactured to a specific porosity with the slurry. The impregnated foam is then dried and fired in a kiln. The foam burns off leaving a porous ceramic body, which is used as the filter. Ceramic filters come in various sizes, typically 7", 9", 12", 15", 17", 20", 23" and 26" square, and 2" thick (16cm, 20cm, 27cm, 34cm, 38cm, 45cm, 52cm and 58cm square, and 5cm thick).

For use, the filter is mounted in a refractory filter bowl. Liquid aluminium is poured into the bowl through the filter, which traps fine particles in the liquid metal. When the casting operation is complete, the aluminium remaining within the ceramic filter freezes, forming a block of virtually solid aluminium.

After use, the filter must be removed and replaced before the next casting operation. Current industrial practice to remove the filter is to stab a hole in the filter while it is still full of liquid aluminium with a hooked steel bar. The aluminium is then allowed to freeze, after which the filter is pulled out using the bar. This is not however a very elegant or safe solution, as liquid metal can splash out when puncturing the filter. The refractory bowl that houses the filter may also be damaged if the steel bar passes through the filter and jabs the base. Broken filter parts can also sometimes get washed into the next cast.

WO 2007/012795 describes a filter extraction device including a threaded anchor that may be screwed in the filter, allowing it to be extracted more safely and avoiding the risk of damaging the bowl. This device therefore addresses the above-mentioned problems to some extent. However, we have found that there is still a tendency for users to stab the anchor violently into the filter, which can cause the anchor to break. Also, the design of the anchor is such that it takes a relatively long time to insert fully, which increases the operator's exposure to the heat radiated from the filter and the associated equipment.

Also, the filters are brittle and have a tendency to disintegrate when devices are inserted into them.

Accordingly invention seeks to provide a filter extraction device and a method of extracting a filter that mitigates at least one of the aforesaid disadvantages or at least provides an alternative solution.

According to the present invention there is provided an extraction device for use when extracting a ceramic foam filter, according to claim 1.

The extraction device according to the invention is easier to insert into the filter than the device described in WO 2007/012795.

The extraction device may be used to extract a used ceramic foam filter safely and efficiently. Because the filter is not broken violently, there is no significant risk of liquid aluminium being splashed out of the filter or the filter bowl, and very little or no loose debris will be created, so reducing the risk of contaminating a subsequent batch of aluminium. The extraction device locks firmly into the filter, reducing the risk of it being dropped.

Advantageously the outer diameter of the screw thread varies along its length such that the outer diameter of the screw thread increases from the leading end to the trailing end. The increase in diameter is preferably smooth and uniform. Thus the outer diameter of the screw thread is at a maximum towards the trailing end and a minimum towards the leading end. This provides a substantially tapered anchor device thereby defining a substantially conical anchor device. This enables the anchor device to be inserted into the filter more easily and further reduces the amount of molten metal splashed on insertion.

Typically the maximum diameter of the screw thread is in the range approximately 20-100mm, and preferably approximately 50-80mm.

Advantageously the pointed part can be an integral part of the anchor body. Preferably the screw thread extends from the pointed part of the anchor body along at least a substantial portion of the length of the body, for example around 50-100 % of the length of the body.

Typically the anchor body has a maximum diameter in the range 10-40mm, preferably in the range 15-30mm, and more preferably approximately 15-25mm.

Advantageously the extraction device includes a helical groove formed in the anchor body for engagement with the filter, wherein the radial depth of the groove varies along the length of the body. Advantageously the radial depth of the groove varies such that it increases from the trailing end towards the leading end. The radial depth of the groove is at a minimum towards the trailing end and a maximum towards the leading end. This has the effect of reducing the diameter of the body along the length of the anchor device, which reduces the resistance of the body to insertion into the filter and provides additional grip when inserted.

The maximum radial depth of the screw thread is in the range 10-45mm, and is preferably approximately 15-30mm.

Advantageously the screw thread can have an upper surface that extends substantially perpendicularly from the anchor body. The screw thread can have a lower surface that extends from the anchor body such that it is inclined to the anchor body or can have a lower surface that extends substantially perpendicularly from the anchor body.

In one preferred embodiment, the screw thread has a substantially triangular cross-section that tapers from a root portion at the body to a sharp cutting edge. It has been found that anchor devices having screw threads with this arrangement cut into the filter more easily. Advantageously the thickness of the screw thread at the root is in the range 1-10mm, preferably in the range 1-6 mm and more preferably still around 2-4mm. This gives the anchor device low resistance when cutting into the filter and helps to prevent the filter from disintegrating on insertion.

In another preferred embodiment the screw thread includes a side wall, and the side wall is inclined to the longitudinal axis of the anchor device. This provides the anchor device with tapering sides and thus a substantially conical shape, which facilitates easier penetration of the filter device. Advantageously the thickness of the screw thread is in the range 10-30mm, preferably 15-25mm and more preferably still around 17-20mm. This gives the anchor device significant strength, which enables it to withstand the thermal and mechanical stresses involved in the filter extraction operation. The thickness of a turn on the screw thread can be reduced if the screw thread is truncated.

Advantageously the screw thread comprises from one to four turns, and preferably one to three turns. We have found that a screw thread with only a few widely spaced turns provides a much stronger connection with the rather crumbly material of the ceramic foam filter than a thread with more closely spaced turns.

Advantageously the screw thread includes a substantially constant pitch in the range 5-45mm, preferably 10-40mm and more preferably still around 15-35mm. Having a large pitch means that a significant amount of the filter material sits between each turn of the thread, which provides a good mechanical interlock. The constant pitch helps to cut a smooth helical path into the filter. The smooth helical path allows the anchor device to be unscrewed from the filter. A long pitch and a short length anchor device having few turns allows the device to be inserted quickly into the filter.

Advantageously the screw thread can have an overall length that is less than or equal to the depth of the filter. For a filter having a 50mm thickness length is typically in the range 40-48mm, and preferably around 45mm, but may be in the range 20-48mm. This ensures that when the anchor device is inserted into the filter to its full depth, it does not break through the opposite side of the filter, thereby preventing debris from falling into the filter bowl. Advantageously the extraction device can be made from carbon steel. Alternatively, it may be made from stainless steel, an aluminium alloy or another suitable material.

Advantageously the extraction device includes lifting means. Advantageously the lifting means is releaseably connectable to the anchor device. Preferably the lifting means comprises a detachable handle that can be screwed to the anchor device. Alternatively, some other kind of connection means may be provided, for example a bayonet connector.

According to another aspect of the invention there is provided a method of extracting a ceramic foam filter, the method including screwing an extraction device into the filter, and lifting the extraction device to extract the filter, said extraction device being in accordance with any one of the preceding statements of invention, or any combination thereof.

Embodiments of the invention will now be described by way of example only, with reference to the accompanying drawings, in which:
Figure 1 shows a first embodiment of an extraction device according to the invention, which includes an anchor member;
Figure 2 is a perspective view from below of the anchor member;
Figure 3 is a perspective view from above of the anchor member;
Figures 4 to 6 are side views of the anchor member in alternative rotational orientations about a longitudinal axis;
Figure 7 is a plan view of the anchor member from above;
Figure 8 is a plan view of the anchor member from below;
Figure 9 is a cross-section of the anchor member; and
Figure 10 is a perspective view from above of a anchor member for a second extraction device according to the invention; and
Figure 11 shows a cross-section of the anchor device of Figure 10.

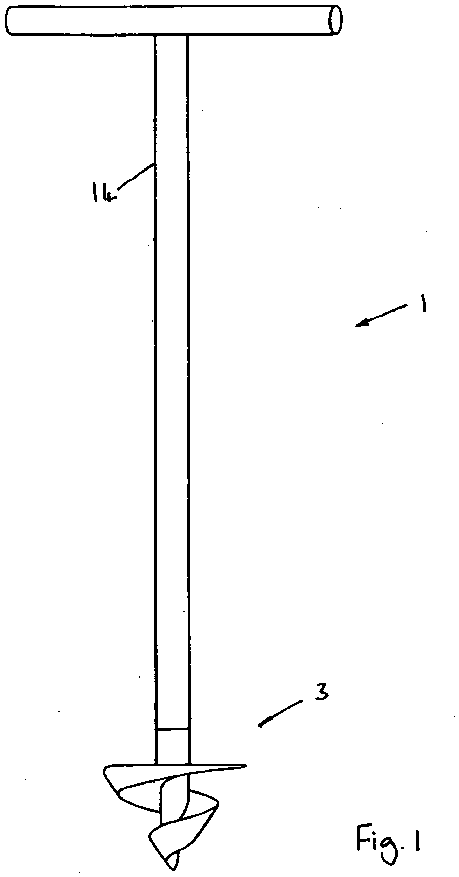

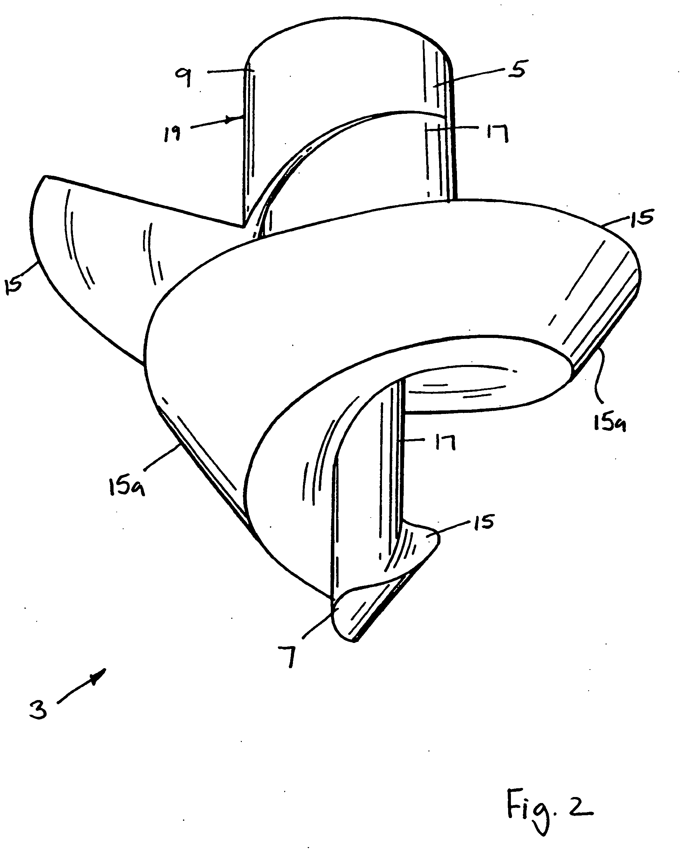

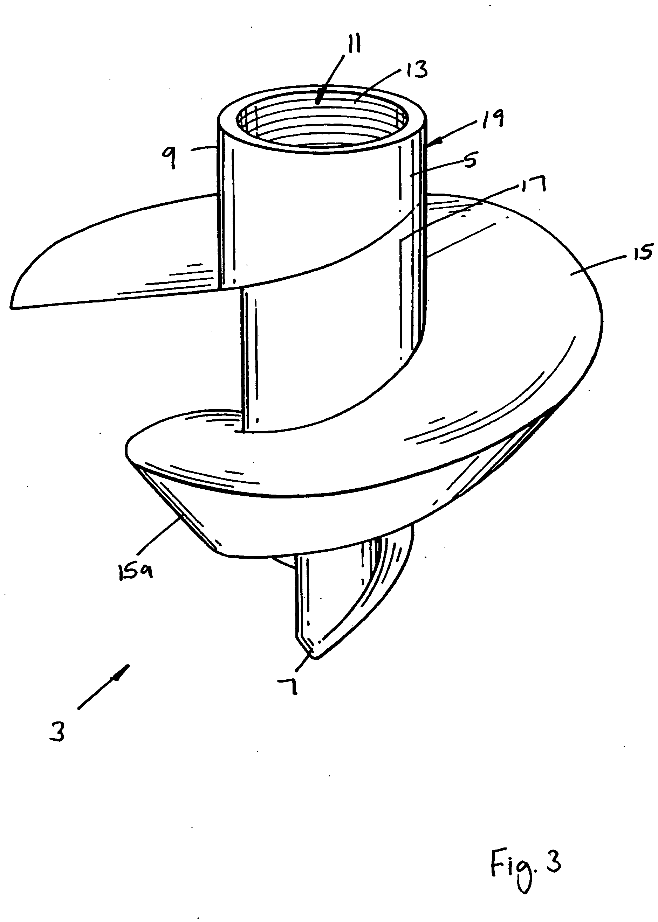

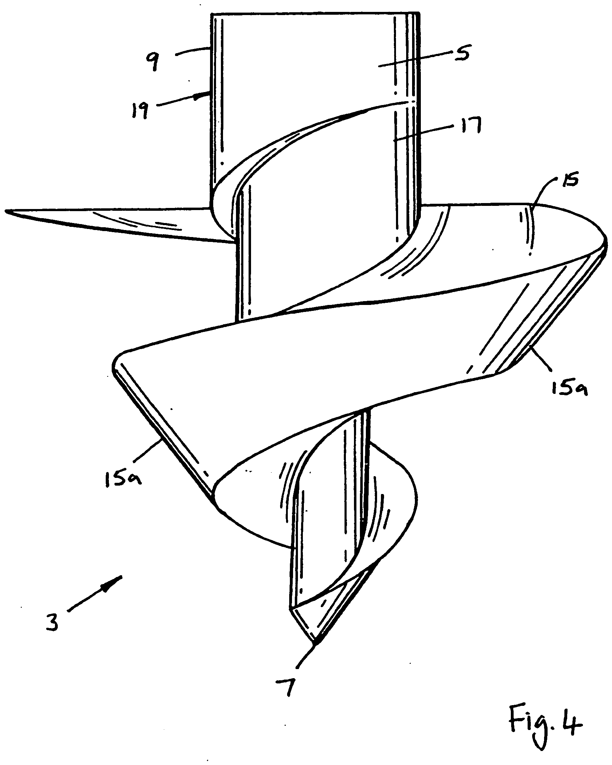

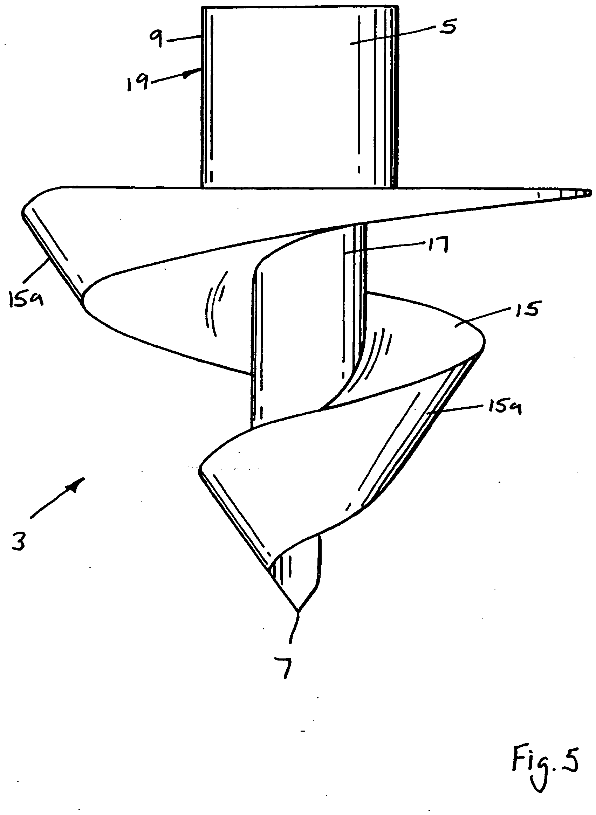

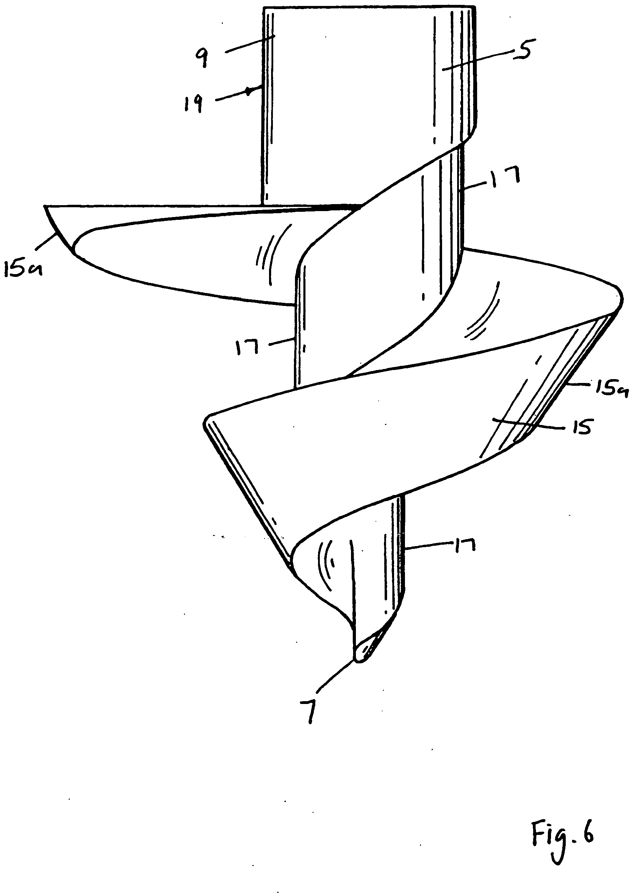

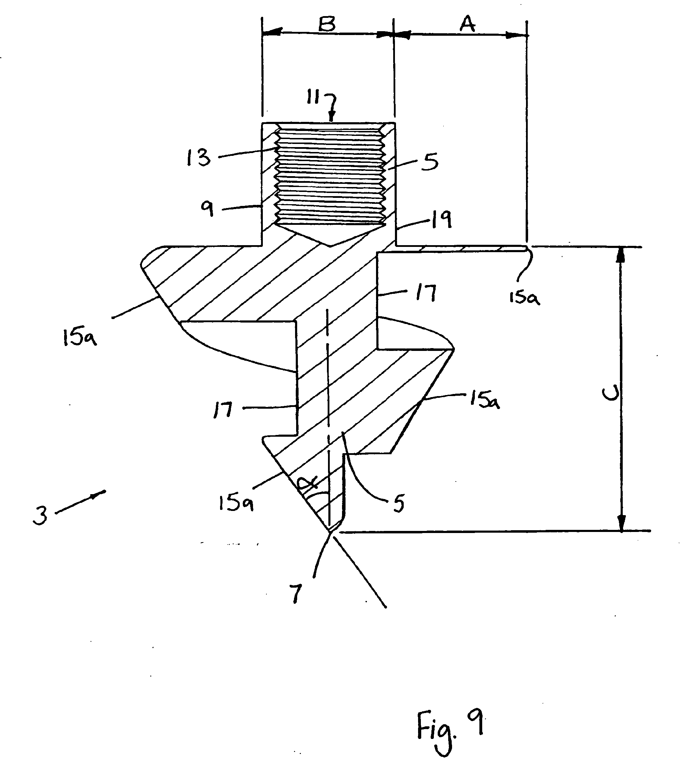

A first extraction tool 1 for removing a ceramic filter from a mould is shown in Figures 1 to 9, which includes an anchor member 3 comprising a body 5 having a pointed tip 7 at one end of the body and a connector portion 9 including a cylindrical bore 11 at the other end of the body. The bore 11 is provided with an M 16 internal screw thread 13 (see Figure 9) for forming a connection with a lifting tool 14. The lifting tool 14 may, for example, consist of a detachable handle such as a T-bar having a complementary external M 16 screw thread (not shown) at one end for engagement with the internal screw thread 13. The lifting tool 14 additionally, or alternatively, may include a lifting eye for connection to a hoist or other lifting mechanism.

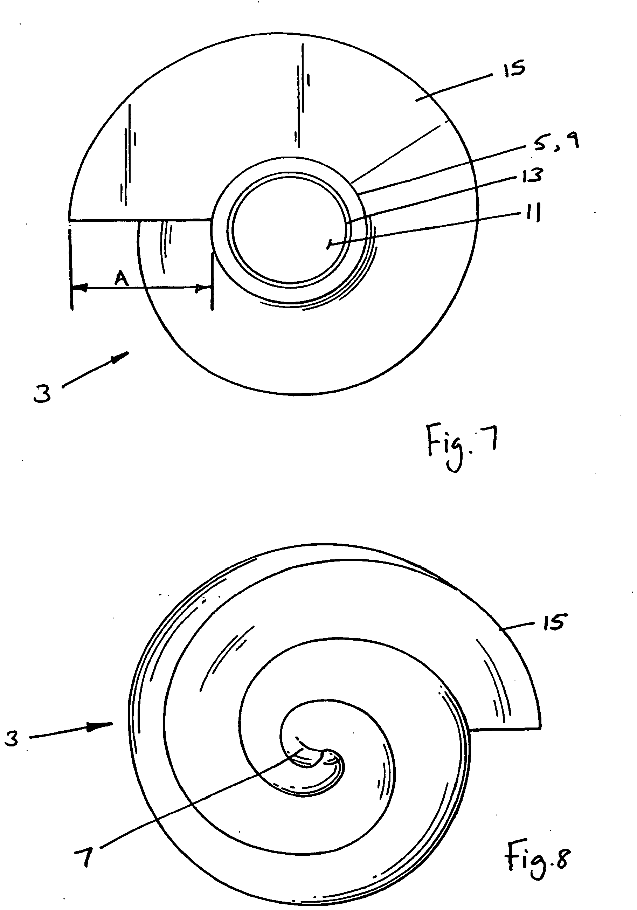

The anchor member 3 has an external helical screw thread 15 that extends outwards from the body 5. The radial depth of the screw thread A, and hence the effective outer diameter of the anchor member 3, reduces from a maximum at the connecter portion 9 to a minium at the tip 7. This, together with an inclined side wall 15a, defines a substantially conical outer profile. Preferably the radial depth of the screw thread A adjacent the connector portion 9 is around 20mm (see Figures 8 and 9). The side wall 15a is inclined to the longitudinal axis of the anchor member 3 by an angle α, which is approximately 35 degrees.

The screw thread 15 extends along a substantial part of the length of the body, typically around 80% of the length from the tip 7, and includes approximately 1½ widely spaced turns. The screw thread 15 has a constant pitch of about 34 mm and a thread thickness of around 15mm. The thickness of the thread towards the connector portion 9 is reduced since the screw thread 15 is truncated.

The body 5 includes a helical groove 17 formed in its outer curved surface 19 that extends along a substantial part of the length of the body 5, typically around 80% of the length of the body 5 from the tip 7. Thus the body 5 has a substantially circular cross-section along its length however the diameter of the body 5 reduces along the length of the body 5 from a maximum B at the connector portion 9 to a minium at the tip 7. The diameter of the tip 7 is typically around 3mm to 8mm, and preferably around 5mm. Thus the helical groove 17 reduces the diameter of the body 5 such that the tip 7 is only around 25% of the maximum diameter of the body B. Since the body 5 has a reduced diameter around the tip 7 it is easier for the anchor to penetrate the filter and thereby reduces the amount of splashing of molten metal.

The body 5 has a maximum diameter B of approximately 19mm, so that the maximum overall diameter of the extraction tool is approximately 56mm. The screw thread 15 has a length C of less than 45mm from the tip 7 to the upper most point of the external screw thread 15. This prevents the anchor from piercing the filter when fully inserted. Preferably the extraction tool 1 is made from carbon steel to resist abrasion from the filter material.

In use, the lifting tool 14 is connected to the anchor member 3, by being screwed into the threaded bore 11 at the upper end of the body to form the extraction tool 1. Then, while the aluminium within the filter is still in a liquid state, the extraction tool 1 is driven into the upper face of the ceramic foam filter by initially stabbing the pointed tip 7 into the surface of the filter and then rotating the extraction tool 1. The screw thread 15 cuts a helical path into the filter thereby locking the extraction tool 1 into the filter. The extraction tool 1 is driven into the filter until the anchor member 3 is fully embedded and the top of the external screw thread 15 is flush with the top surface of the filter. As the length of the screw thread 15 is slightly less than the thickness of the filter, it will not break through the lower face of the filter, thereby preventing debris from falling into the filter bowl.

The pointed tip 7, and to some extent the varying outer diameter of the external screw thread 15, enables the extraction tool 1 to be more easily inserted into the filter. This is particularly useful to prevent molten metal from splashing at the time of piercing the filter. The low number of thread turns and the large pitch retain the integrity of the filter during the insertion process. It also means that the device can be fully inserted more quickly than the prior art device disclosed in WO 2007/012795 since full insertion is achieved by rotating the device less than two turns. This is advantageous to the operators who want minimal operation times due to the hazards of working with molten metal. The thickness of the thread 15 provides the strength required to withstand the impact force and the thermal stresses when the extraction tool 1 is inserted into the filter. It also enables the anchor member 3 to be produced by lost wax casting.

The extraction tool 1 is left in the filter until the retained aluminium has solidified: this further increases the mechanical interlock between the anchor member 3 and the filter. The filter is then extracted from the filter bowl by lifting the extraction tool 1. The filter can therefore be removed easily and cleanly, without leaving debris in the filter bowl and without giving rise to a risk of liquid aluminium being splashed out of the filter. A new filter can then be placed in the filter bowl so that it is ready for another casting operation.

The lifting tool 14 can be detached from the anchor member 3 for re-use, whereas typically the anchor member 3 remains in the filter.

It will be appreciated that modifications can be made to the above embodiment that fall within the scope of the invention, for example dimensions of the device may vary as follows: the screw thread can have 1 to 3 turns, the maximum thickness of the screw thread is typically in the range 10-30mm.

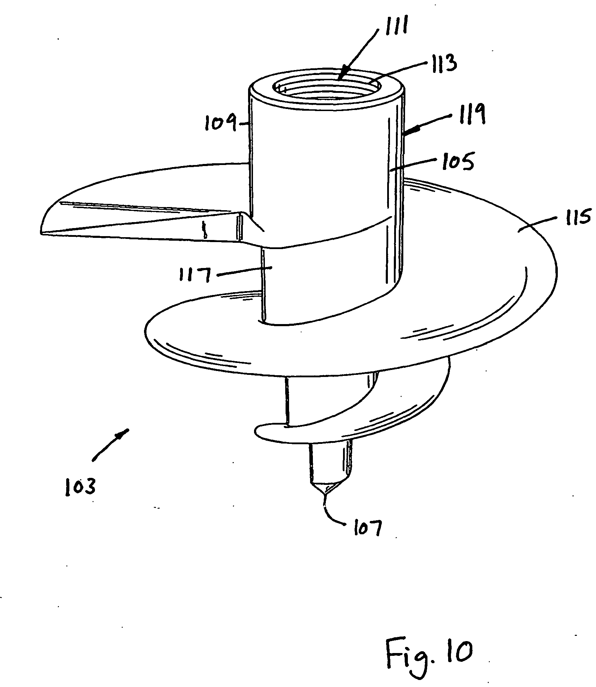

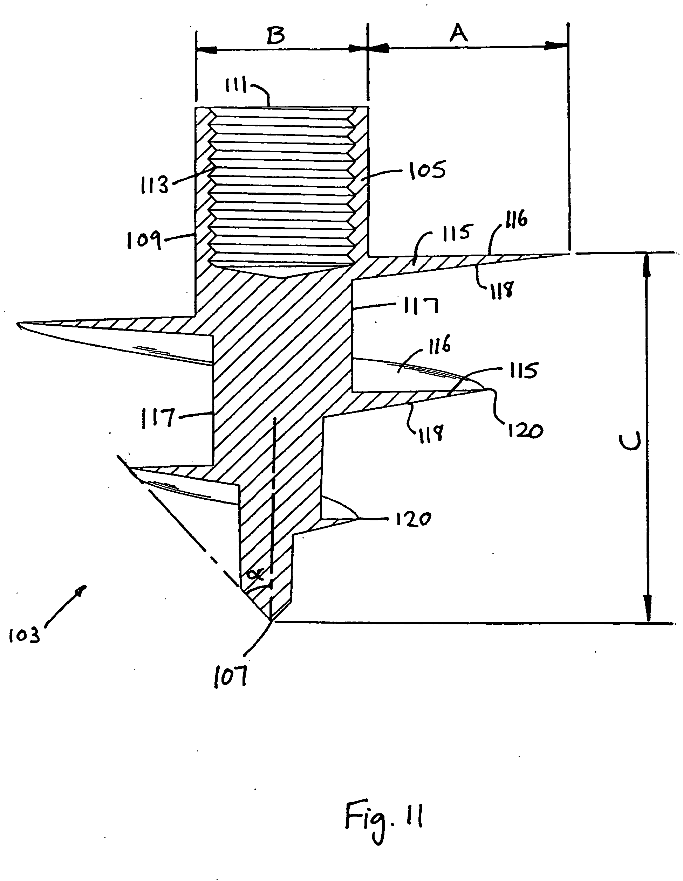

Part of a second embodiment of the invention is shown in Figures 10 and 11. The second embodiment is similar to the first embodiment in that it includes an anchor member 103 comprising a body 105 having a pointed tip 107 at one end of the body and a connector portion 109 including a cylindrical bore 111 at the other end of the body. The bore 111 is provided with an M16 internal screw thread 113 1 for forming a connection with a lifting tool (not shown) that is similar to that shown in Figure 1. The lifting tool may, for example, consist of a detachable handle such as a T-bar having a complementary external M16 screw thread (not shown) at one end for engagement with the internal screw thread 113. The lifting tool additionally, or alternatively, may include a lifting eye for connection to a hoist or other lifting mechanism.

The anchor member 103 has an external helical screw thread 115 that extends outwards from the body 105. The radial depth of the screw thread A, and hence the effective outer diameter of the anchor member 103, reduces from a maximum at the connecter portion 109 to a minium at the tip 107. This defines a substantially conical outer profile having an angle of inclination to the longitudinal axis of the body α, which is approximately 40 degrees. Preferably the radial depth of the screw thread A adjacent the connector portion 109 is around 20mm.

The screw thread 115 extends along a substantial part of the length of the body, typically around 80% of the length from the tip 7, and includes approximately three widely spaced turns. The screw thread 115 has a substantially triangular cross-section having an upper surface 116 (the surface facing towards the connector portion 109) arranged to extend substantially perpendicularly from the body 105 and a lower surface 118 that is inclined to the body 105, wherein the meeting of the upper and lower surfaces 116,118 defines a sharp cutting edge 120. The inventors have found that this form of thread cuts more easily into the filter, which assists the user to insert the device without being splashed by molten metal since the extraction device can be turned with less force and more smoothly. The screw thread 115 has a substantially constant pitch of about 17 mm and a substantially constant thread thickness of around 3mm at the root. The large pitch and relatively thin thread thickness allows a significant portion of filter material to move between the threads during insertion (or extraction), which prevents the filter from disintegrating when the extraction tool is inserted (or extracted). Since the screw thread 115 has a substantially constant pitch and a substantially constant thread thickness it cuts a helical path into the filter, which remains substantially in tact after insertion. This has the advantages of allowing the extraction device to be unscrewed from the filter without the filter disintegrating and also ensuring that the extraction device has a good mechanical interlock on the filter so that the filter can be successfully lifted from the mould.

The body 105 has a maximum diameter B of approximately 21mm, so that the maximum overall diameter of the extraction tool is approximately 80mm. The screw thread 115 has a length C of around 48 mm from the tip 107 to the upper most point of the external screw thread 115. This prevents the anchor from piercing the filter when fully inserted.

The body 105 includes a helical groove 117 formed in its outer curved surface 119 that extends along a substantial part of the length of the body 105, typically around 80% of the length of the body 105 from the tip 107. Thus the body 105 has a substantially circular cross-section along its length however the diameter of the body 105 reduces along the length of the body 105 from a maximum B at the connector portion 109 to a minium at the tip 107. The diameter of the tip 107 is typically around 3mm to 8mm, and preferably around 5mm. Thus the helical groove 117 reduces the diameter of the body 105 such that the tip 107 is only around 25% of the maximum diameter of the body B. Since the body 105 has a reduced diameter around the tip 107 it is easier for the anchor to penetrate the filter and thereby reduces the amount of splashing of molten metal.

Preferably the extraction tool 101 is made from carbon steel to resist abrasion from the filter material. The anchor 103 can be made by casting or can be machined.

The method of connecting the lifting tool to the anchor 103, and the use of the extraction device, is similar to that described for the first embodiment.

It will be appreciated that modifications can be made to the second embodiment that fall within the scope of the invention, for example dimensions of the device may vary as follows: the screw thread typically has 2 to 4 turns, and the maximum thickness of the screw thread is typically in the range 1-10mm.

It will be appreciated that modifications can be made to the above embodiments that fall within the scope of the invention, for example dimensions of the device may vary as follows: the screw thread can have 1 to 4 turns, the screw thread typically extends along 50-100 % of the length of the anchor from the tip however it may extend over a shorter portion if necessary, the angle α is typically in the range 15-60°, and is preferably around 30-45°, the maximum outside diameter is typically in the range 40-100mm, the maximum radial depth of the screw thread is typically in the range 10-45mm, the anchor body has a maximum diameter that is typically in the range 15-30mm, the screw thread has a pitch that is typically in the range 5-40mm, and the screw thread has an overall length that is typically less than or equal to 45mm for filters having a depth of 45mm, and is preferably in range 20-45mm.

If the depth of the filter is greater than 45mm, the length of the screw thread 15 can be increased provided that it does not penetrate the lower side of the filter. Other dimensions can be scaled accordingly.

## Claims

1. An extraction device (1) for use when extracting a ceramic foam filter, the extraction device (1) including, an anchor device (3;103) suitable for driving into the filter, said anchor device (3;103) having an anchor body (5;105) with a leading end (7;107) and a trailing end (9;109) and an external screw thread (15;115) for engagement with the filter, said screw thread (15;115) having a pitch in the range 5-45mm, a maximum radial depth (A) of the screw thread is in the range 10 to 45mm and lifting means (14) that is releasably attachable to the trailing end (9; 109) of the anchor device; **characterised in that** the anchor body (5;105) includes a substantially pointed part at the leading end (7;107) for piercing a surface of the filter, the outer diameter of the screw thread varies along the length of the body such that it increases from a minimum at the leading end (7;107) to a maximum at the trailing end (9;109) thereby defining a substantially conical outer profile having an angle of inclination (α) to the longitudinal axis of the body in the range 15-60°, and the body (5;105) further including a helical groove (17;117) formed in the anchor body (5;105) for engagement with the filter such that the depth of the groove (17;117) varies along the length of the body.

2. An extraction device according to claim 1, wherein the maximum diameter of the screw thread (15;115) is in the range 20-100mm, preferably approximately 50-80mm.

3. An extraction device according to claim 1 or 2, wherein the pointed part (7;107) is an integral part of the anchor body (5;105).

4. An extraction device according to any one of the preceding claims, wherein the radial depth of the groove (17;117) increases from the trailing end (9;109) towards the leading end (7;107), thereby reducing the diameter of the body (5;105) from a maximum at the trailing end (9; 1 09) to a minimum at the leading end (7; 107).

5. An extraction device according to any one of the preceding claims, wherein the maximum radial depth (A)of the screw thread is in the range 15-30mm.

6. An extraction device according to any one of the preceding claims, wherein the anchor body (5;105) has a maximum diameter in the range 13-22mm.

7. An extraction device according to any one of the preceding claims, wherein the screw thread has an upper surface (116) that extends substantially perpendicularly from the anchor body (5; 105).

8. An extraction device according to any one of the preceding claims, wherein the screw thread has a lower surface (118) that extends from the anchor body such that it is inclined to the anchor body (5; 105).

9. An extraction device according to any one of the preceding claims, wherein the screw thread (15; 115) has a substantially triangular cross-section and is arranged to taper from a root portion at the body (5; 105) to a sharp cutting edge (120).

10. An extraction device according to any one of claims 1 to 9, wherein the screw thread has a side wall (15a), and the side wall (15a) is inclined to the longitudinal axis of the anchor device.

11. An extraction device according to any one of claims 1 to 9, wherein the screw thread has a lower surface that extends substantially perpendicularly from the anchor body (5; 105).

12. An extraction device according to any one of the preceding claims, wherein the thickness of the screw thread (15; 115) is in the range 1-30mm.

13. An extraction device according to any one of the preceding claims, wherein the screw thread (15;115) comprises from one to four turns.

14. An extraction device according to any one of the preceding claims, wherein the screw thread (15;115) has a pitch in the range 10-40mm.

15. An extraction device according to any one of the preceding claims, wherein the screw thread (15;115) has an overall length that is is in range 20-48mm.

16. A method of extracting a ceramic foam filter, the method including screwing an extraction device (1) according to any one of claims 1 to 15 into the filter, and lifting the extraction device (1) to extract the filter.

## Patentansprüche

1. Abziehvorrichtung (1) zur Verwendung beim Abziehen eines Keramikschaumfilters, wobei die Abziehvorrichtung (1) Folgendes beinhaltet: eine Ankervorrichtung (3; 103), die zum Eintreiben in den Filter geeignet ist, wobei die genannte Ankervorrichtung (3; 103) einen Ankerkörper (5; 105) mit einem vorderen Ende (7; 107) und einem hinteren Ende (9; 109) und einem Außengewinde (15; 115) zur Ineingriffnahme des Filters hat, wobei das genannte Gewinde (15; 115) eine Steigung im Bereich von 5 bis 45 mm hat, wobei eine maximale radiale Tiefe (A) des Gewindes im Bereich von 10 bis 45 mm liegt, und ein Hebemittel (14), das abnehmbar an dem hinteren Ende (9; 109) der Ankervorrichtung angebracht werden kann, **dadurch gekennzeichnet, dass** der Ankerkörper (5; 105) am vorderen Ende (7; 107) ein im Wesentliches spitzes Teil zum Durchbohren einer Oberfläche des Filters hat, wobei der Außendurchmesser des Gewindes entlang der Länge des Körpers variiert, so dass er von einem Mindestmaß am vorderen Ende (7; 107) bis zu einem Höchstmaß am hinteren Ende (9; 109) zunimmt, wodurch ein im Wesentlichen konisches Außenprofil definiert wird, das einen Neigungswinkel (α) zur Längsachse des Körpers im Bereich von 15° bis 60° hat, und wobei der Körper (5; 105) ferner eine im dem Ankerkörper (5; 105) ausgebildete Spiralnut (17; 117) zur Ineingriffnahme des Filters aufweist, so dass die Tiefe der Nut (17; 117) entlang der Länge des Körpers variiert.

2. Abziehvorrichtung nach Anspruch 1, wobei der maximale Durchmesser des Gewindes (15; 115) im Bereich von 20 bis 100 mm, vorzugsweise etwa 50 bis 80 mm liegt.

3. Abziehvorrichtung nach Anspruch 1 oder Anspruch 2, wobei das spitze Teil (7; 107) ein Bestandteil des Ankerkörpers (5; 105) ist.

4. Abziehvorrichtung nach einem der vorhergehenden Ansprüche, wobei die radiale Tiefe der Nut (17; 117) vom hinteren Ende (9; 109) zum vorderen Ende (7; 107) hin zunimmt, wodurch der Durchmesser des Körpers (5; 105) von einem Höchstmaß am hinteren Ende (9; 109) zu einem Mindestmaß am vorderen Ende (7; 107) abnimmt.

5. Abziehvorrichtung nach einem der vorhergehenden Ansprüche, wobei die maximale radiale Tiefe (A) des Gewindes im Bereich von 15 bis 30 mm liegt.

6. Abziehvorrichtung nach einem der vorhergehenden Ansprüche, wobei der Ankerkörper (5; 105) einen maximalen Durchmesser im Bereich von 13 bis 22 mm hat.

7. Abziehvorrichtung nach einem der vorhergehenden Ansprüche, wobei das Gewinde eine obere Oberfläche (116) hat, die sich im Wesentlichen lotrecht vom Ankerkörper (5; 105) aberstreckt.

8. Abziehvorrichtung nach einem der vorhergehenden Ansprüche, wobei das Gewinde eine untere Oberfläche (118) hat, die sich so vom Ankerkörper aberstreckt, dass sie zum Ankerkörper (5; 105) geneigt ist.

9. Abziehvorrichtung nach einem der vorhergehenden Ansprüche, wobei das Gewinde (15; 115) einen im Wesentlichen dreieckigen Querschnitt hat und so angeordnet ist, dass es sich von einem Wurzelteil am Körper (5; 105) zu einer scharfen Schneide (120) verjüngt.

10. Abziehvorrichtung nach einem der Ansprüche 1 bis 9, wobei das Gewinde eine Seitenwand (15a) hat und die Seitenwand (15a) zur Längsachse der Ankervorrichtung geneigt ist.

11. Abziehvorrichtung nach einem der Ansprüche 1 bis 9, wobei das Gewinde eine untere Oberfläche hat, die sich im Wesentlichen lotrecht vom Ankerkörper (5; 105) aberstreckt.

12. Abziehvorrichtung nach einem der vorhergehenden Ansprüche, wobei die Dicke des Gewindes (15; 115) im Bereich von 1 bis 30 mm liegt.

13. Abziehvorrichtung nach einem der vorhergehenden Ansprüche, wobei das Gewinde (15; 115) ein bis vier Windungen aufweist.

14. Abziehvorrichtung nach einem der vorhergehenden Ansprüche, wobei das Gewinde (15; 115) eine Steigung im Bereich von 10 bis 40 mm hat.

15. Abziehvorrichtung nach einem der vorhergehenden Ansprüche, wobei das Gewinde (15; 115) eine Gesamtlänge hat, die im Bereich von 20 bis 48 mm liegt.

16. Verfahren zum Abziehen eines Keramikschaumfilters, wobei das Verfahren das Einschrauben einer Abziehvorrichtung (1) nach einem der Ansprüche 1 bis 15 in den Filter und das Anheben der Abziehvorrichtung (1) zum Abziehen des Filters beinhaltet.

## Revendications

1. Dispositif d'extraction (1) pour l'utilisation lors de l'extraction d'un filtre en mousse céramique, le dispositif d'extraction (1) incluant un dispositif d'ancrage (3 ; 103) adapté à l'entraînement dans le filtre, ledit dispositif d'ancrage (3 ; 103) ayant un corps d'ancrage (5 ; 105) avec une extrémité avant (7 ; 107) et une extrémité arrière (9 ; 109) et un filetage de vis externe (15 ; 115) pour la mise en prise avec le filtre, ledit filetage de vis (15 ; 115) ayant un pas de l'ordre de 5 à 45 mm, la profondeur radiale maximale (A) du filetage de vis étant de l'ordre de 10 à 45 mm, et un moyen de levage (14) qui est fixé de manière amovible à l'extrémité arrière (9 ; 109) du dispositif d'ancrage ; **caractérisé en ce que** le corps d'ancrage (5 ; 105) inclut une partie substantiellement pointue à l'extrémité avant (7 ; 107) pour percer une surface du filtre, le diamètre externe du filetage de vis varie le long de la longueur du corps de telle sorte qu'il augmente à partir d'un minimum à l'extrémité avant (7 ; 107) à un maximum à l'extrémité arrière (9 ; 109), définissant ainsi un profil externe substantiellement conique ayant un angle d'inclinaison (α) par rapport à l'axe longitudinal du corps de l'ordre de 15 à 60°, et le corps (5 ; 105) incluant en outre une rainure hélicoïdale (17 ; 117) formée dans le corps d'ancrage (5 ; 105) pour la mise en prise avec le filtre de telle sorte que la profondeur de la rainure (17 ; 117) varie le long de la longueur du corps.

2. Dispositif d'extraction selon la revendication 1, où le diamètre maximal du filetage de vis (15 ; 115) est de l'ordre de 20 à 100 mm, de préférence approximativement de 50 à 80 mm.

3. Dispositif d'extraction selon la revendication 1 ou 2, où la partie pointue (7 ; 107) fait partie intégrante du corps d'ancrage (5 ; 105).

4. Dispositif d'extraction selon une quelconque des revendications précédentes, où la profondeur radiale de la rainure (17 ; 117) augmente à partir de l'extrémité arrière (9 ; 109) vers l'extrémité avant (7 ; 107), réduisant ainsi le diamètre du corps (5 ; 105) à partir d'un maximum à l'extrémité arrière (9 ; 109) à un minimum à l'extrémité avant (7 ; 107).

5. Dispositif d'extraction selon une quelconque des revendications précédentes, où la profondeur radiale maximale (A) du filetage de vis est de l'ordre de 15 à 30 mm.

6. Dispositif d'extraction selon une quelconque des revendications précédentes, où le corps d'ancrage (5 ; 105) a un diamètre maximal de l'ordre de 13 à 22 mm.

7. Dispositif d'extraction selon une quelconque des revendications précédentes, où le filetage de vis a une surface supérieure (116) qui s'étend substantiellement perpendiculairement à partir du corps d'ancrage (5 ; 105).

8. Dispositif d'extraction selon une quelconque des revendications précédentes, où le filetage de vis a une surface inférieure (118) qui s'étend à partir du corps d'ancrage de telle sorte qu'elle est inclinée par rapport au corps d'ancrage (5 ; 105).

9. Dispositif d'extraction selon une quelconque des revendications précédentes, où le filetage de vis (15 ; 115) a une section transversale substantiellement triangulaire et est disposé de sorte à s'effiler à partir d'une partie de base en correspondance du corps (5 ; 105) vers un bord de découpe tranchant (120).

10. Dispositif d'extraction selon une quelconque des revendications 1 à 9, où le filetage de vis a une paroi latérale (15a), et la paroi latérale (15a) est inclinée par rapport à l'axe longitudinal du dispositif d'ancrage.

11. Dispositif d'extraction selon une quelconque des revendications 1 à 9, où le filetage de vis a une surface inférieure qui s'étend substantiellement perpendiculairement à partir du corps d'ancrage (5 ; 105).

12. Dispositif d'extraction selon une quelconque des revendications précédentes, où l'épaisseur du filetage de vis (15 ; 115) est de l'ordre de 1 à 30 mm.

13. Dispositif d'extraction selon une quelconque des revendications précédentes, où le filetage de vis (15 ; 115) comprend un à quatre tours.

14. Dispositif d'extraction selon une quelconque des revendications précédentes, où le filetage de vis (15 ; 115) a un pas de l'ordre de 10 à 40 mm.

15. Dispositif d'extraction selon une quelconque des revendications précédentes, où le filetage de vis (15 ; 115) a une longueur globale qui est de l'ordre de 20 à 48 mm.

16. Procédé d'extraction d'un filtre en mousse céramique, le procédé consistant à visser un dispositif d'extraction (1) selon une quelconque des revendications 1 à 15 dans le filtre, et à soulever le dispositif d'extraction (1) pour extraire le filtre.
